# EUROPEAN PATENT SPECIFICATION

(11) **EP 1 393 410 B1**
(45) Date of publication and mention of the grant of the patent: **26.10.2005**
(21) Application number: 01945154.1
(22) Date of filing: 17.05.2001
(51) Int. Cl.: H01Q 9/38

(54) **DEVICE AND METHOD FOR TEMPORARY DEACTIVATION OF SUBSCRIBER INFORMATION**
VORRICHTUNG UND VERFAHREN ZUR ZEITWEILIGEN DEAKTIVIERUNG VON TEILNEHMERINFORMATIONEN
DISPOSITIF ET PROCEDE ASSURANT LA DESACTIVATION TEMPORAIRE D'INFORMATIONS RELATIVES AUX ABONNES

(43) Date of publication of application: 03.03.2004
(73) Proprietor: Nokia Corporation, 02150 Espoo (FI)
(72) Inventor: PEGLION, Marc, FIN-33250 Tampere (FI); PALDAN, Esko, FIN-37500 Lempäälä (FI); VIRTANEN, Kari, Olavi, FIN-33720 Tampere (FI); ESKELINEN, Timo, FIN-33730 Tampere (FI)
(74) Representative: TBK-Patent
(86) International application number: PCT/EP2001/005678
(87) International publication number: WO 2002/093689

(56) References cited:
- WO-A-99/39534

## Description

The invention relates to the management of subscriber information in a communication network, preferably a packet-based network such as a GPRS system. The subscriber information to be managed is contained in a database, preferably a subscriber information register such as HLR (Home Location Register).

More specifically, the invention relates to the management of PDP context information of one or more subscribers contained in a subscriber information register such as HLR.

Whenever an operator wants to bar a certain PDP context of a subscriber from the GPRS network, without barring the entire subscriber, it usually has to delete that PDP context entirely from the HLR database. When subsequently unbarring that PDP context for the subscriber, the operator must then newly re-create this PDP context. This procedure is difficult and sometimes not reliable as the operator has to ensure that the data of the "new" PDP context is the same as it was before deletion. Such operations are likely to happen when e.g. a subscriber has one or a certain number of prepaid PDP contexts which the operator wants to de-activate temporarily while the accounts are zero, while being allowed to re-activate them when the accounts are refilled by the subscriber.

Another situation may be a case when an operator may want to mass-produce subscriber information for a plurality of GPRS subscribers, but not give the subscribers immediate access to the network. This permits the operator to have standard PDP contexts available for each and every subscriber in the HLR, but to activate these contexts only when the subscriber(s) actually subscribe(s) to a GPRS connection.

WO-A 99-39534 discloses a method and system of registration of a mobile station in a telecommunications system. The system supports a first network, such as GSM, and a second network, such as GPRS, and comprises a home location register, HLR, for maintaining mobile subscriber data. The home location register further maintains an access parameter which indicates whether a mobile subscriber is entitled to use the first network, the second network or both networks. A message can be sent to the home location register for requesting the mobile subscriber data. In response to a message requesting the subscriber data, the home location register sends the mobile subscriber data and also said access parameter. The network element that requested the mobile subscriber data uses the access parameter for restricting the access of the mobile subscriber to a circuit-switched network and/or to a packet-switched network.

The invention provides a system and method for temporary deactivation of subscriber information in a register, preferably for temporary deactivation of one or more PDP context(s) provided for one or more subscriber(s).

The invention provides a method as defined in claim 1 or any of the dependent claims 2 to 10. The invention further provides a system as defined in claim 11, or any of the dependent claims 12 to 20.

The invention also provides a database entity as defined in claim 21 or any of the dependent claims 22 to 26.

In accordance with one aspect of the invention, a method and system are provided for controlling information flow in a communication system comprising at least one subscriber equipment and a subscriber information database entity which contains subscription-related information for defining the management of packet-based information flow, preferably GPRS traffic, to and/or from respective subscriber equipments. The database entity contains additional information associated to the stored subscription-related information which additional information defines whether stored subscription-related information may or may not be used for actually defining the management of packet-based information flow to and/or from respective subscriber equipments. Several PDP Contexts can be stored for a subscriber, wherein each of the several PDP Contexts stored for a subscriber has a separate flag indicating whether or not the respective PDP Context can be used for actually defining the management of packet-based information.

The communication system preferably comprises at least one support node, in particular a GPRS Support Node such as a SGSN, for handling the information flow to and/or from the subscriber equipment. The subscriber information database entity preferably is a Home Location Register (HLR).

The subscription-related information may correspond to at least one PDP Context for one or more of the subscribers.

When additional information defining that the stored subscription-related information may not be used for actually defining the management of packet-based information flow to and/or from respective subscriber equipments is written into the database entity, the database entity preferably sends a message to the support node storing the subscription-related information, the message commanding the support node to delete the stored subscription-related information. When additional information defining that the stored subscription-related information may be used for actually defining the management of packet-based information flow to and/or from respective subscriber equipments is written into said database entity, the database entity sends a message to the support node for copying at least part of the subscription-related information stored in the database entity to the support node for subsequent use for defining the management of packet-based information flow to and/or from respective subscriber equipments.

The additional information may be written into the database from an operator entity.

The invention permits a network operator or other person/authority/entity to disable a subscriber's PDP context without actually deleting it from the subscriber register, e.g. HLR containing or forming the database entity. This means that should the operator want to re-enable the PDP context, there is no need to re-create the entry in the subscriber data in the subscriber register. The operator just needs to "activate" the PDP context.

This solution provides a viable improvement on e.g. PDP context handling in subscriber's GPRS data. It saves much time and the subscription is guaranteed to remain unchanged when temporarily barring it from the network as the PDP context data is not removed from the HLR but just "deactivated".

It is therefore easy for the operator to ensure that the data in the "new" PDP context is the same as it was before deletion. Such a temporary deactivation of PDP contexts may e.g. be performed by an operator when a subscriber has one or a certain number of prepaid PDP contexts which the operator wants to de-activate temporarily while the prepaid accounts are empty, while being allowed to re-activate them when the account(s) are refilled by the subscriber.

The invention furthermore e.g. allows an operator to mass-produce information for subscribers, e.g. GPRS subscribers, but not give them immediate access to the network. This permits the operator to have standard PDP contexts available for each and every subscriber in the subscriber register, e.g. HLR, but to activate them only when the subscriber actually subscribes to a GPRS connection.

A Functional status flag is added to the PDP context data in the subscriber database (subscriber information database entity). This flag represents the additional information mentioned above and will be read by the database to define whether or not the PDP context data should be made available to the subscriber's current SGSN.

The invention provides HLR support in a GPRS network. Since the additional information, e.g. Functional Status flag, is not transmitted to the outside of the HLR, there is no adverse affect on the standards such as ETSI/3GPP standards. Thus the invention is completely independent of the present standards.

The invention does not affect the external interfaces of the subscriber database such as HLR and is an improvement on the inner workings of the database.

The invention is easy to implement and provides remarkable advantages, e.g. in situations where there is a malfunction or a problem in the behaviour of the network or a subscriber. The invention enables prompt reduction of usage of PDP contexts without deleting the whole PDP context(s).

The invention does not affect HLR capacity to handle traffic to SGSN and the signalling between HLR and SGSN remains the same.

In accordance with one of the preferred optional aspects of the invention, after a predetermined time since deactivation, a deactivated PDP context can be removed from HLR.

### BRIEF DESCRIPTION OF THE DRAWINGS

Fig. 1 illustrates a basic structure of a communication system in accordance with an embodiment of the invention, and
Fig. 2 shows the structure of a table contained in a subscriber information register.

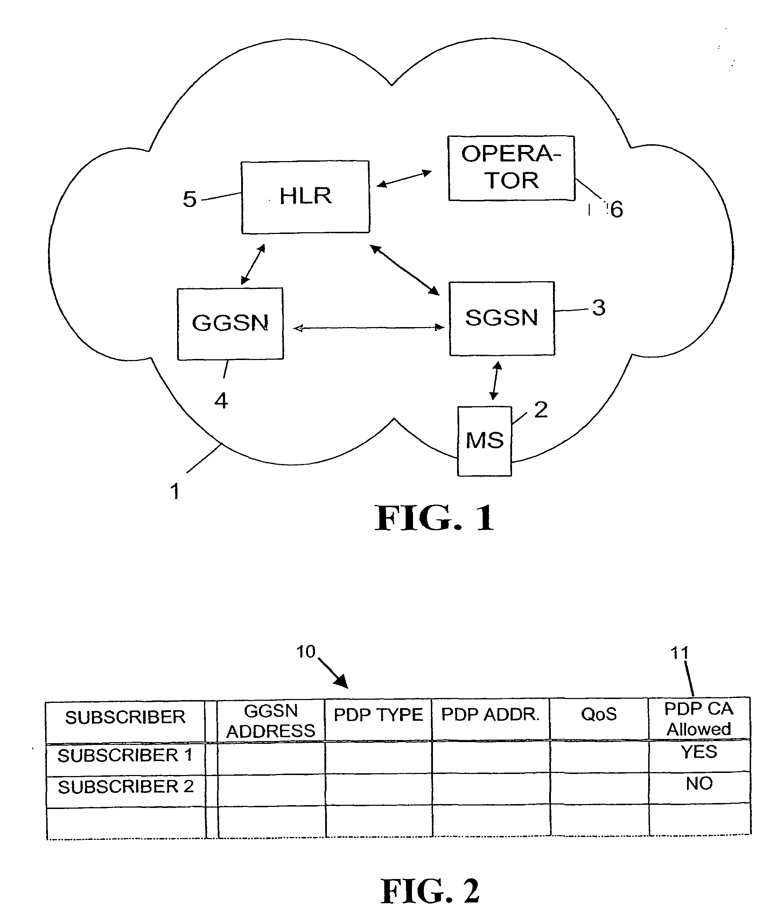

Fig. 1 shows the system architecture of a communication system (or network) 1, e.g. of GPRS (General Packet Radio Service) or GSM structure such as public land mobile network (PLMN). A mobile or fixed user terminal 2, e.g. GSM mobile station, is denoted as MS.

One or more subscriber information registers such as home location register (HLR) 5 include(s) data bases available for call control and network management. For all users registered with a network operator, permanent data (such as the user's profile) as well as temporary data (such as the user's current location) are stored in the HLR 5. In case of a call to a user, the HLR 5 is always first queried, to determine the user's current location.

In order to integrate GPRS into the existing GSM architecture, a GPRS System Architecture comprising a class of network nodes, called GPRS support nodes (GSN) 3, 4, has been introduced. GSNs are responsible for the delivery and routing of data packets between the mobile stations and other terminals or networks such as external packet data networks (PDN) .

A Serving GPRS Support Node (SGSN) is responsible for the delivery of data packets from and to the mobile stations 2 within its service area. Its tasks include packet routing and transfer, mobility management (attach/detach and location management), logical link management, and authentication and charging functions. The location register of the SGSN 3 stores location information (e.g., current cell, current VLR) and user profiles (e.g., IMSI, address(es) used in the packet data network) of all GPRS users registered with this SGSN 3.

A Gateway GPRS Support Node (GGSN) 4 acts as an interface between the GPRS backbone network and external packet data networks. It converts the GPRS packets coming from the SGSN into the appropriate packet data protocol (PDP) format (e.g., IP or X.25) and sends them out on the corresponding packet data network. In the other direction, PDP addresses of incoming data packets are converted to the GSM address of the destination user. The readdressed packets are sent to the responsible SGSN. For this purpose, the GGSN stores the current SGSN address of the user and his or her profile in its location register.

Via appropriate interfaces, user data and signaling data are transmitted between the GSNs. All GSNs are connected via an IP-based GPRS backbone network.

Interfaces may connect the network 1 with external public or private PDNs, such as the Internet or corporate intranets.

The HLR 5 serves as subscriber information database entity and stores the subscription-related information such as user profile, the current SGSN address, and the PDP address(es) for each GPRS user in the network 1. An interface is used to exchange this information between HLR 5 and SGSN 3. For example, the SGSN 3 informs the HLR 5 about the current location of the MS. When the MS 2 registers with a new SGSN, the HLR 5 will send the user profile to the new SGSN. The signaling path between GGSN 4 and HLR 5 may be used by the GGSN 4 to query a user's location and profile in order to update its location register.

The invention allows the operator or any other authorized person or entity to declare and set a subscriber's PDP context data stored in HLR 5 "Inactive", in other words to "De-activate" a subscriber's PDP context stored in HLR 5. "De-activate" is to be understood to forbid this PDP context or PDP context related information or PDP context information to be sent to the subscriber's current GSN, e.g. SGSN 3.

Fig. 2 schematically shows part of the data stored in the register 5. The register 5 includes a database 10 which contains PDP Context data for each, or at least some of the registered subscribers. In the table shown in Fig. 2, the data are schematically inserted in rows for the respective subscribers "Subscriber 1", "Subscriber 2", etc. This is of course an example only. The arrangement of subscribers and associated data in the table or database may be arbitrary, provided that the interrelation between subscribers and associated data is clear.

The PDP Context data of database 10 include the customary information such as the address of a GGSN to be used for a subscriber in case of GGSN necessity, PDP type such as IPv4, PDP address, QoS (Quality of Service) etc. In accordance with the present invention, the database contains additional information such as the flags (PDP Context Activation (CA) Allowed) shown in column 11. This additional information indicates whether or not the PDP Context information stored for a respective subscriber may be used for a requested PDP Context Activation.

In the embodiment, several PDP Contexts may be stored for one subscriber each. Each stored PDP Context may have a separate flag indicating whether or not the respective PDP Context can be used. This allows to selectively offer all, only a restricted number, or none of all the PDP Contexts provided for a subscriber in case a PDP Context Activation is requested for this subscriber.

When a PDP context is de-activated, the HLR 5 will send a message, e.g. DSD, to the relevant SGSN 3 to remove the PDP context from the subscriber data stored there, while keeping the data stored in the HLR database for further use. DSD (Delete Subscriber Data) is a MAP operation where the HLR can delete/remove part of a subscriber's data, like a PDP context, from the SGSN's database. This operation is not used to remove the entire subscription. It is important to note that the stored PDP context data is not removed from the HLR 5 in this operation.

When the PDP context is re-activated, the HLR 5 sends a message, e.g. ISD, to the SGSN, using the existing HLR data, to restore the PDP context's connection to the GPRS network. ISD (Insert Subscriber Data) is a MAP operation with which the HLR can add a subscriber to the SGSN database, and also Add/Modify a subscriber's data within that database.

Another feature of this invention is that the operator 6 may assign "inactive" PDP contexts to its subscribers, hence making them "GPRS ready", but may inhibit the activation of the PDP contexts until the subscriber actually subscribes for a GPRS connection.

The invention is preferably implemented by adding the flag information shown in column 11 of Fig. 2, e.g. a Functional Status flag, to the PDP context data in the HLR 5. This flag is not transmitted to the outside of the HLR 5 and thus does not affect the standards, e.g. ETSI/3GPP standards. The flag can be set to "Active" or "De-Activated" by an operator (equipment) 6 sending appropriate messages to the HLR 5. The flag will be read by the HLR 5 to define whether or not the PDP context data should be made available to the subscriber's current GSN, e.g. SGSN 3.

When a PDP context is de-activated, the HLR 5 will send a message, e.g. DSD, to the relevant SGSN 3 to remove the PDP context from the subscriber data stored there, while keeping the data stored in the HLR database for further use. When the PDP context is to be re-activated, the HLR 5 sends a message, e.g. an ISD, to the SGSN 3, using the existing HLR data, to restore the PDP context's connection to the GPRS network. The data is not removed from the HLR in this operation.

In accordance with another embodiment of the invention, a timer means is provided in the subscriber information database entity, such as the HLR, or in an entity cooperating with the database entity. A time measurement is started by triggering the timer means when a deactivation of a PDP Context takes place. The subscriber information database entity, or the entity cooperating with the database entity, are adapted to automatically completely delete a deactivated PDP Context after a predetermined time (e.g. a week or several days) since deactivation. The deactivated PDP context will thus be completely removed from the database entity. This ensures an automatic cancellation of inactivated PDP Contexts, avoiding the problem of too large memory capacity being occupied by inactivated PDP Contexts.

Although the invention has been described above with reference to specific embodiments, the scope of the invention also covers any alterations, additions, modifications, and omissions of the disclosed features.

## Claims

1. Method for controlling information flow in a communication system comprising at least one subscriber equipment (2) and a subscriber information database entity (5) which contains subscription-related information for defining the management of packet-based information flow to and/or from respective subscriber equipments (2), wherein the database entity (5) contains additional information associated to the stored subscription-related information, said additional information defining whether stored subscription-related information may or may not be used for actually defining the management of packet-based information flow to and/or from respective subscriber equipments (2), **characterised in that** several PDP Contexts are stored for a subscriber, each of the several PDP Contexts stored for a subscriber having a separate flag indicating whether or not the respective PDP Context can actually be used for a requested PDP Context activation.

2. Method according to claim 1, wherein the communication system comprises at least one support node (3) for handling the information flow to and/or from the subscriber equipment (2).

3. Method according to claim 2, wherein the support node is a GPRS Support Node (3).

4. Method according to any one of the preceding claims, wherein the subscriber information database entity (5) is a Home Location Register, HLR.

5. Method according to any one of the preceding claims, wherein the subscription-related information concerns one or more PDP Contexts.

6. Method according to any one of the preceding claims, wherein, when said additional information defining that the stored subscription-related information may not be used for actually defining the management of packet-based information flow to and/or from respective subscriber equipments is written into said database entity (5), the database entity sends a message to a support node storing the subscription-related information, the message commanding the support node to delete the stored subscription-related information.

7. Method according to any one of the preceding claims, wherein, when said additional information defining that the stored subscription-related information may be used for actually defining the management of packet-based information flow to and/or from respective subscriber equipments (2) is written into said database entity (5), the database entity (5) sends a message to a support node for copying at least part of the subscription-related information stored in the database entity to the support node (4) for subsequent use for defining the management of packet-based information flow to and/or from respective subscriber equipments.

8. Method according to any one of the preceding claims, wherein said additional information defining that the stored subscription-related information may or may not be used for actually defining the management of packet-based information flow to and/or from respective subscriber equipments is written into said database (5) from an operator entity (6).

9. Method according to any one of the preceding claims, wherein said packet-based information flow is based on GPRS.

10. Method according to any one of the preceding claims, wherein stored subscription-related information which is defined by the associated additional information not to be used for actually defining the management of packet-based information flow to and/or from respective subscriber equipments (2), is automatically deleted from the database entity (5) after expiry of a predetermined time interval after writing this additional information into the database entity (5).

11. System for controlling information flow in a communication system comprising at least one subscriber equipment (2) and a subscriber information database entity (5) which contains subscription-related information for defining the management of packet-based information flow to and/or from respective subscriber equipments (2), wherein the database entity (5) contains additional information associated to the stored subscription-related information, said additional information defining whether stored subscription-related information may or may not be used for actually defining the management of packet-based information flow to and/or from respective subscriber equipments (2), **characterised in that** the subscriber information database entity (5) is adapted to store several PDP Contexts for a subscriber, each of the several PDP Contexts stored for a subscriber having a separate flag indicating whether or not the respective PDP Context can actually be used for a requested PDP Context activation.

12. System according to claim 11, comprising at least one support node (3) for handling the information flow to and/or from the subscriber equipment.

13. System according to claim 12, wherein the support node (3) is a GPRS Support Node.

14. System according to any one of the preceding system claims, wherein the subscriber information database entity (5) is a Home Location Register, HLR.

15. System according to any one of the preceding system claims, wherein the subscription-related information is or concerns one or more PDP Contexts.

16. System according to any one of the preceding system claims, wherein, when said additional information defining that the stored subscription-related information may not be used for actually defining the management of packet-based information flow to and/or from respective subscriber equipments (2) is written into said database entity (5), the database entity sends a message to a support node (4) storing the subscription-related information, the message commanding the support node to delete the stored subscription-related information.

17. System according to any one of the preceding system claims, wherein, when said additional information defining that the stored subscription-related information may be used for actually defining the management of packet-based information flow to and/or from respective subscriber equipments (2) is written into said database entity (5), the database entity sends a message to a support node (4) for copying at least part of the subscription-related information stored in the database entity to the support node for subsequent use for defining the management of packet-based information flow to and/or from respective subscriber equipments (2).

18. System according to any one of the preceding system claims, comprising an operator entity (6) for writing said additional information into said database (5).

19. System according to any one of the preceding system claims, wherein said packet-based information flow is based on GPRS.

20. System according to any one of the preceding system claims, wherein a timer means is provided in the subscriber information database entity (5) or in an entity cooperating with the database entity (5), the database entity or cooperating entity being adapted to trigger the timer means when a deactivation of stored subscription-related information takes place, and to delete, after expiry of a predetermined time after deactivation, a deactivated stored subscription-related information from the database entity.

21. Subscriber information database entity (5) for use in a method according to any one of the preceding method claims, or in a system according to any one of the preceding system claims, said database entity (5) containing subscription-related information for defining the management of packet-based information flow to and/or from subscriber equipments (2), as well as additional information associated to the stored subscription-related information, said additional information defining whether stored subscription-related information may or may not be used for actually defining the management of packet-based information flow to and/or from respective subscriber equipments (2), **characterised in that** the subscriber information database entity (5) is adapted to store several PDP Contexts for a subscriber, each of the several PDP Contexts stored for a subscriber having a separate flag indicating whether or not the respective PDP Context can actually be used for a requested PDP Context activation

22. Database entity according to claim 21, wherein the subscriber information database entity (5) is a Home Location Register, HLR.

23. Database entity according to claim 21 or 22, wherein the subscription-related information is or concerns one or more PDP Contexts.

24. Database entity according to any one of the preceding entity claims, wherein, when said additional information defining that the stored subscription-related information may not be used for actually defining the management of packet-based information flow to and/or from respective subscriber equipments (2) is written into said database entity, the database entity (5) is adapted to send a message to a support node (4) storing the subscription-related information, the message commanding the support node to delete the stored subscription-related information.

25. Database entity according to any one of the preceding entity claims, wherein, when said additional information defining that the stored subscription-related information may be used for actually defining the management of packet-based information flow to and/or from respective subscriber equipments (2) is written into said database entity (5), the database entity is adapted to send a message to a support node (4) for copying at least part of the subscription-related information stored in the database entity to the support node for subsequent use for defining the management of packet-based information flow to and/or from respective subscriber equipments.

26. Database entity according to any one of the preceding entity claims, comprising a timer means, the database entity (5) being adapted to trigger the timer means when a deactivation of stored subscription-related information takes place, and to delete, after expiry of the timer means, a deactivated stored subscription-related information from the database entity.

## Patentansprüche

1. Verfahren zur Steuerung eines Informationsflusses in einem Kommunikationssystem mit zumindest einer Teilnehmereinrichtung (2) und einer Teilnehmerinformationsdatenbankinstanz (5), die Teilnehmervertrag-bezogene Informationen zum Festlegen der Handhabung eines paketbasierten Informationsflusses zu und/oder von jeweiligen Teilnehmereinrichtungen (2) enthält, wobei die Datenbankinstanz (5) zusätzliche Informationen enthält, die mit den gespeicherten Teilnehmervertrag-bezogenen Informationen in Zusammenhang stehen, wobei die zusätzlichen Informationen festlegen, ob gespeicherte Teilnehmervertrag-bezogene Informationen zum tatsächlichen Festlegen der Handhabung eines paketbasierten Informationsflusses zu und/oder von jeweiligen Teilnehmereinrichtungen (2) verwendet werden können oder nicht, **dadurch gekennzeichnet, dass** mehrere PDP-Kontexte für einen Teilnehmer gespeichert sind, wobei jeder der mehreren PDP-Kontexte, die für einen Teilnehmer gespeichert sind, eine separate Kennzeichnung aufweist, die angibt, ob der jeweilige PDP-Kontext tatsächlich für eine angeforderte PDP-Kontext-Aktivierung verwendet werden kann oder nicht.

2. Verfahren gemäß Anspruch 1, bei dem das Kommunikationssystem zumindest einen Unterstützungsknoten (3) zum Abwickeln des Informationsflusses zu und/oder von der Teilnehmereinrichtung (2) aufweist.

3. Verfahren gemäß Anspruch 2, bei dem der Unterstützungsknoten ein GPRS-Unterstützungsknoten (3) ist.

4. Verfahren gemäß einem der vorhergehenden Ansprüche, bei dem die Teilnehmerinformationsdatenbankinstanz (5) ein Heimatstandortverzeichnis HLR ist.

5. Verfahren gemäß einem der vorhergehenden Ansprüche, bei dem die Teilnehmervertrag-bezogenen Informationen einen oder mehrere PDP-Kontexte betreffen.

6. Verfahren gemäß einem der vorhergehenden Ansprüche, bei dem die Datenbankinstanz, wenn die zusätzlichen Informationen in die Datenbankinstanz (5) geschrieben werden, die festlegen, dass die gespeicherten Teilnehmervertrag-bezogenen Informationen nicht zum tatsächlichen Festlegen der Handhabung eines paketbasierten Informationsflusses zu und/oder von jeweiligen Teilnehmereinrichtungen verwendet werden können, eine Nachricht an einen Unterstützungsknoten sendet, der die Teilnehmervertrag-bezogenen Informationen speichert, wobei die Nachricht den Unterstützungsknoten anweist, die gespeicherten Teilnehmervertrag-bezogenen Informationen zu löschen.

7. Verfahren gemäß einem der vorhergehenden Ansprüche, bei dem die Datenbankinstanz (5), wenn die zusätzlichen Informationen in die Datenbankinstanz (5) geschrieben werden, die festlegen, dass die gespeicherten Teilnehmervertrag-bezogenen Informationen zum tatsächlichen Festlegen der Handhabung eines paketbasierten Informationsflusses zu und/oder von jeweiligen Teilnehmereinrichtungen (2) verwendet werden können, eine Nachricht an einen Unterstützungsknoten sendet, um zumindest einen Teil der in der Datenbankinstanz gespeicherten Teilnehmervertrag-bezogenen Informationen zur anschließenden Verwendung zum Festlegen der Handhabung eines paketbasierten Informationsflusses zu und/oder von jeweiligen Teilnehmereinrichtungen an den Unterstützungsknoten (4) zu kopieren.

8. Verfahren gemäß einem der vorhergehenden Ansprüche, bei dem die zusätzlichen Informationen, die festlegen, dass die gespeicherten Teilnehmervertrag-bezogenen Informationen zum tatsächlichen Festlegen der Handhabung eines paketbasierten Informationsflusses zu und/oder von jeweiligen Teilnehmereinrichtungen verwendet werden können oder nicht, von einer Betreiberinstanz (6) in die Datenbank (5) geschrieben werden.

9. Verfahren gemäß einem der vorhergehenden Ansprüche, bei dem der paketbasierte Informationsfluss auf GPRS basiert.

10. Verfahren gemäß einem der vorhergehenden Ansprüche, bei dem gespeicherte Teilnehmervertrag-bezogene Informationen, die durch die zugehörigen zusätzlichen Informationen festgelegt sind, nicht zum tatsächlichen Festlegen der Handhabung eines paketbasierten Informationsflusses zu und/oder von jeweiligen Teilnehmereinrichtungen (2) verwendet zu werden, nach Ablauf eines vorbestimmten Zeitintervalls seit Schreiben dieser zusätzlichen Informationen in die Datenbankinstanz (5) automatisch aus der Datenbankinstanz (5) gelöscht werden.

11. System zur Steuerung eines Informationsflusses in einem Kommunikationssystem mit zumindest einer Teilnehmereinrichtung (2) und einer Teilnehmerinformationsdatenbankinstanz (5), die Teilnehmervertrag-bezogene Informationen zum Festlegen der Handhabung eines paketbasierten Informationsflusses zu und/oder von jeweiligen Teilnehmereinrichtungen (2) enthält, wobei die Datenbankinstanz (5) zusätzliche Informationen enthält, die mit den gespeicherten Teilnehmervertrag-bezogenen Informationen in Zusammenhang stehen, wobei die zusätzlichen Informationen festlegen, ob gespeicherte Teilnehmervertrag-bezogene Informationen zum tatsächlichen Festlegen der Handhabung eines paketbasierten Informationsflusses zu und/oder von jeweiligen Teilnehmereinrichtungen (2) verwendet werden können oder nicht, **dadurch gekennzeichnet, dass** die Teilnehmerinformationsdatenbankinstanz (5) angepasst ist, mehrere PDP-Kontexte für einen Teilnehmer zu speichern, wobei jeder der mehreren PDP-Kontexte, die für einen Teilnehmer gespeichert sind, eine separate Kennzeichnung aufweist, die angibt, ob der jeweilige PDP-Kontext tatsächlich für eine angeforderte PDP-Kontext-Aktivierung verwendet werden kann oder nicht.

12. System gemäß Anspruch 11, mit zumindest einem Unterstützungsknoten (3) zum Abwickeln des Informationsflusses zu und/oder von der Teilnehmereinrichtung.

13. System gemäß Anspruch 12, bei dem der Unterstützungsknoten (3) ein GPRS-Unterstützungsknoten ist.

14. System gemäß einem der vorhergehenden Systemansprüche, bei dem die Teilnehmerinformationsdatenbankinstanz (5) ein Heimatstandortverzeichnis HLR ist.

15. System gemäß einem der vorhergehenden Systemansprüche, bei dem die Teilnehmervertrag-bezogenen Informationen ein oder mehrere PDP-Kontexte sind oder betreffen.

16. System gemäß einem der vorhergehenden Systemansprüche, bei dem die Datenbankinstanz, wenn die zusätzlichen Informationen in die Datenbankinstanz (5) geschrieben werden, die festlegen, dass die gespeicherten Teilnehmervertrag-bezogenen Informationen nicht zum tatsächlichen Festlegen der Handhabung eines paketbasierten Informationsflusses zu und/oder von jeweiligen Teilnehmereinrichtungen (2) verwendet werden können, eine Nachricht an einen Unterstützungsknoten (4) sendet, der die Teilnehmervertrag-bezogenen Informationen speichert, wobei die Nachricht den Unterstützungsknoten anweist, die gespeicherten Teilnehmervertrag-bezogenen Informationen zu löschen.

17. System gemäß einem der vorhergehenden Systemansprüche, bei dem die Datenbankinstanz, wenn die zusätzlichen Informationen in die Datenbankinstanz (5) geschrieben werden, die festlegen, dass die gespeicherten Teilnehmervertrag-bezogenen Informationen zum tatsächlichen Festlegen der Handhabung eines paketbasierten Informationsflusses zu und/oder von jeweiligen Teilnehmereinrichtungen (2) verwendet werden können, eine Nachricht an einen Unterstützungsknoten (4) sendet, um zumindest einen Teil der in der Datenbankinstanz gespeicherten Teilnehmervertrag-bezogenen Informationen zur anschließenden Verwendung zum Festlegen der Handhabung eines paketbasierten Informationsflusses zu und/oder von jeweilige Teilnehmereinrichtungen (2) an den Unterstützungsknoten zu kopieren.

18. System gemäß einem der vorhergehenden Systemansprüche, mit einer Betreiberinstanz (6) zum Schreiben der zusätzlichen Informationen in die Datenbank (5).

19. System gemäß einem der vorhergehenden Systemansprüche, bei dem der paketbasierte Informationsfluss auf GPRS basiert.

20. System gemäß einem der vorhergehenden Systemansprüche, bei dem in der Teilnehmerinformationsdatenbankinstanz (5) oder in einer mit der Datenbankinstanz (5) zusammenarbeitenden Instanz eine Zeitgebereinrichtung bereitgestellt ist, wobei die Datenbankinstanz oder die zusammenarbeitende Instanz angepasst ist, die Zeitgebereinrichtung auszulösen, wenn eine Deaktivierung gespeicherter Teilnehmervertrag-bezogenen Informationen erfolgt, und nach Ablauf einer vorbestimmten Zeitspanne seit einer Deaktivierung deaktivierte gespeicherte Teilnehmervertrag-bezogene Informationen aus der Datenbankinstanz zu löschen.

21. Teilnehmerinformationsdatenbankinstanz (5) zur Verwendung bei einem Verfahren gemäß einem der vorhergehenden Verfahrensansprüche oder bei einem System gemäß einem der vorhergehenden Systemansprüche, wobei die Datenbankinstanz (5) Teilnehmervertrag-bezogene Informationen zum Festlegen der Handhabung eines paketbasierten Informationsflusses zu und/oder von Teilnehmereinrichtungen (2) ebenso wie zusätzliche Informationen enthält, die mit den gespeicherten Teilnehmervertrag-bezogenen Informationen in Zusammenhang stehen, wobei die zusätzlichen Informationen festlegen, ob gespeicherte Teilnehmervertrag-bezogene Informationen zum tatsächlichen Festlegen der Handhabung eines paketbasierten Informationsflusses zu und/oder von jeweiligen Teilnehmereinrichtungen (2) verwendet werden können oder nicht, **dadurch gekennzeichnet, dass** die Teilnehmerinformationsdatenbankinstanz (5) angepasst ist, mehrere PDP-Kontexte für einen Teilnehmer zu speichern, wobei jeder der mehreren PDP-Kontexte, die für einen Teilnehmer gespeichert sind, eine separate Kennzeichnung aufweist, die angibt, ob der jeweilige PDP-Kontext tatsächlich für eine angeforderte PDP-Kontext-Aktivierung verwendet werden kann oder nicht.

22. Datenbankinstanz gemäß Anspruch 21, wobei die Teilnehmerinformationsdatenbankinstanz (5) ein Heimatstandortverzeichnis HLR ist.

23. Datenbankinstanz gemäß Anspruch 21 oder 22, wobei die Teilnehmervertrag-bezogenen Informationen ein oder mehrere PDP-Kontexte sind oder betreffen.

24. Datenbankinstanz gemäß einem der vorhergehenden Instanzansprüche, wobei die Datenbankinstanz (5) angepasst ist, wenn die zusätzlichen Informationen in die Datenbankinstanz geschrieben werden, die festlegen, dass die gespeicherten Teilnehmervertrag-bezogenen Informationen nicht zum tatsächlichen Festlegen der Handhabung eines paketbasierten Informationsflusses zu und/oder von jeweiligen Teilnehmereinrichtungen (2) verwendet werden können, eine Nachricht an einen Unterstützungsknoten (4) zu senden, der die Teilnehmervertrag-bezogenen Informationen speichert, wobei die Nachricht den Unterstützungsknoten anweist, die gespeicherten Teilnehmervertrag-bezogenen Informationen zu löschen.

25. Datenbankinstanz gemäß einem der vorhergehenden Instanzansprüche, wobei die Datenbankinstanz angepasst ist, wenn die zusätzlichen Informationen in die Datenbankinstanz (5) geschrieben werden, die festlegen, dass die gespeicherten Teilnehmervertrag-bezogenen Informationen zum tatsächlichen Festlegen der Handhabung eines paketbasierten Informationsflusses zu und/oder von jeweiligen Teilnehmereinrichtungen (2) verwendet werden können, eine Nachricht an einen Unterstützungsknoten (4) zu senden, um zumindest einen Teil der in der Datenbankinstanz gespeicherten Teilnehmervertrag-bezogenen Informationen zur anschließenden Verwendung zum Festlegen der Handhabung eines paketbasierten Informationsflusses zu und/oder von jeweiligen Teilnehmereinrichtungen an den Unterstützungsknoten zu kopieren.

26. Datenbankinstanz gemäß einem der vorhergehenden Instanzansprüche, mit einer Zeitgebereinrichtung, wobei die Datenbankinstanz (5) angepasst ist, die Zeitgebereinrichtung auszulösen, wenn eine Deaktivierung gespeicherter Teilnehmervertrag-bezogener Informationen erfolgt, und deaktivierte gespeicherte Teilnehmervertrag-bezogene Informationen nach Ablauf der Zeitgebereinrichtung aus der Datenbankinstanz zu löschen.

## Revendications

1. Procédé pour contrôler le flux d'informations dans un système de communication comprenant au moins un équipement d'abonné (2) et une entité de base de données d'informations d'abonné (5) qui contient des informations relatives aux abonnements pour définir la gestion d'un flux d'informations à base de paquets vers et/ou depuis des équipements d'abonné respectifs (2), dans lequel l'entité de base de données (5) contient des informations supplémentaires associées aux informations relatives aux abonnements stockées, lesdites informations supplémentaires définissant si les informations relatives aux abonnements stockées peuvent ou ne peuvent pas être utilisées pour définir effectivement la gestion de flux d'informations à base de paquets vers et/ou depuis des équipements d'abonné respectifs (2), **caractérisé en ce que** plusieurs contextes PDP sont stockés pour un abonné, chacun des plusieurs contextes PDP stockés pour un abonné ayant un indicateur séparé indiquant si le contexte PDP respectif peut être ou non effectivement utilisé pour une activation de contexte PDP demandée.

2. Procédé selon la revendication 1, dans lequel le système de communication comprend au moins un noeud de support (3) pour traiter le flux d'informations vers et/ou depuis l'équipement d'abonné (2).

3. Procédé selon la revendication 2, dans lequel le noeud de support est un noeud de support GPRS (3).

4. Procédé selon l'une quelconque des revendications précédentes, dans lequel l'entité de base de données d'informations d'abonné (5) est un registre de localisation nominal, HLR.

5. Procédé selon l'une quelconque des revendications précédentes, dans lequel les informations relatives aux abonnements concernent un ou plusieurs contextes PDP.

6. Procédé selon l'une quelconque des revendications précédentes, dans lequel, lorsque lesdites informations supplémentaires définissant que les informations relatives aux abonnements stockées ne peuvent pas être utilisées pour définir effectivement la gestion d'un flux d'informations à base de paquets vers et/ou depuis les équipements d'abonné respectifs sont écrites dans ladite entité de base de données (5), l'entité de base de données envoie un message à un noeud de support stockant les informations relatives aux abonnements, le message commandant au noeud de support de supprimer les informations relatives aux abonnements stockées.

7. Procédé selon l'une quelconque des revendications précédentes, dans lequel, lorsque lesdites informations supplémentaires définissant que les informations relatives aux abonnements stockées peuvent être utilisées pour définir effectivement la gestion d'un flux d'informations à base de paquets vers et/ou depuis les équipements d'abonné respectifs (2) sont écrites dans ladite entité de base de données (5), l'entité de base de données (5) envoie un message à un noeud de support pour copier au moins une partie des informations relatives aux abonnements stockées dans l'entité de base de données vers le noeud de support (4) pour utilisation consécutive pour définir la gestion d'un flux d'informations à base de paquets vers et/ou depuis des équipements d'abonné respectifs.

8. Procédé selon l'une quelconque des revendications précédentes, dans lequel lesdites informations supplémentaires définissant que les informations relatives aux abonnements stockées peuvent ou ne peuvent pas être utilisées pour définir effectivement la gestion d'un flux d'informations à base de paquets vers et/ou depuis les équipements d'abonné respectifs sont écrites dans ladite entité de base de données (5) depuis une entité d'opérateur (6).

9. Procédé selon l'une quelconque des revendications précédentes, dans lequel ledit flux d'informations à base de paquets est basé sur GPRS.

10. Procédé selon l'une quelconque des revendications précédentes, dans lequel les informations relatives aux abonnements stockées qui sont définies par les informations supplémentaires associées n'étant pas à utiliser pour définir effectivement la gestion d'un flux d'informations à base de paquets vers et/ou depuis les équipements d'abonné respectifs (2), sont automatiquement supprimées de l'entité de base de données (5) après l'expiration d'un intervalle de temps prédéterminé après l'écriture de ces informations supplémentaires dans l'entité de base de données (5).

11. Système pour contrôler le flux d'informations dans un système de communication comprenant au moins un équipement d'abonné (2) et une entité de base de données d'informations d'abonné (5) qui contient des informations relatives aux abonnements pour définir la gestion d'un flux d'informations à base de paquets vers et/ou depuis des équipements d'abonné respectifs (2), dans lequel l'entité de base de données (5) contient des informations supplémentaires associées aux informations relatives aux abonnements stockées, lesdites informations supplémentaires définissant si les informations relatives aux abonnements stockées peuvent ou ne peuvent pas être utilisées pour définir effectivement la gestion de flux d'informations à base de paquets vers et/ou depuis des équipements d'abonné respectifs (2), **caractérisé en ce que** l'entité de base de données d'informations d'abonné (5) est adaptée pour stocker plusieurs contextes PDP pour un abonné, chacun des plusieurs contextes PDP stockés pour un abonné ayant un indicateur séparé indiquant si le contexte PDP respectif peut être ou non effectivement utilisé pour une activation de contexte PDP demandée.

12. Système selon la revendication 11, comprenant au moins un noeud de support (3) pour gérer le flux d'informations vers et/ou depuis l'équipement d'abonné.

13. Système selon la revendication 12, dans lequel le noeud de support (3) est un noeud de support GPRS.

14. Système selon l'une quelconque des revendications précédentes, dans lequel l'entité de base de données d'informations d'abonné (5) est un registre de localisation nominal, HLR.

15. Système selon l'une quelconque des revendications précédentes, dans lequel les informations relatives aux abonnements sont ou concernent un ou plusieurs contextes PDP.

16. Système selon l'une quelconque des revendications précédentes, dans lequel, lorsque lesdites informations supplémentaires définissant que les informations relatives aux abonnements stockées ne peuvent pas être utilisées pour définir effectivement la gestion de flux d'informations à base de paquets vers et/ou depuis les équipements d'abonné respectifs (2) sont écrites dans ladite entité de base de données (5), l'entité de base de données envoie un message à un noeud de support (4) stockant les informations relatives aux abonnements, le message commandant au noeud de support de supprimer les informations relatives aux abonnements stockées.

17. Système selon l'une quelconque des revendications précédentes, dans lequel, lorsque lesdites informations supplémentaires définissant que les informations relatives aux abonnements stockées peuvent être utilisées pour définir effectivement la gestion d'un flux d'informations à base de paquets vers et/ou depuis les équipements d'abonné respectifs (2) sont écrites dans ladite entité de base de données (5), l'entité de base de données envoie un message à un noeud de support (4) pour copier au moins une partie des informations relatives aux abonnements stockées dans l'entité de base de données au noeud de support pour utilisation consécutive pour définir la gestion d'un flux d'informations vers et/ou depuis des équipements d'abonné respectifs (2).

18. Système selon l'une quelconque des revendications précédentes, comprenant une entité d'opérateur (6) pour écrire lesdites informations supplémentaires dans ladite base de données (5).

19. Système selon l'une quelconque des revendications précédentes, dans lequel ledit flux d'informations à base de paquets est basé sur GPRS.

20. Système selon l'une quelconque des revendications précédentes, dans lequel des moyens d'horloge sont disposés dans l'entité de base de données d'informations d'abonné (5) ou dans une entité coopérant avec l'entité de base de données (5), l'entité de base de données ou l'entité coopérante étant adaptée pour déclencher les moyens d'horloge lorsqu'une désactivation d'informations relatives aux abonnements stockées se produit, et pour supprimer, après l'expiration d'un temps prédéterminé après la désactivation, des informations relatives aux abonnements stockées désactivées de l'entité de base de données.

21. Entité de base de données d'informations d'abonné (5) pour utilisation dans un procédé selon l'une quelconque des revendications précédentes, ou dans un système selon l'une quelconque des revendications précédentes, ladite entité de base de données (5) contenant des informations relatives aux abonnements pour définir la gestion d'un flux d'informations à base de paquets vers et/ou depuis des équipements d'abonné respectifs (2), ainsi que des informations supplémentaires associées aux informations relatives aux abonnés, lesdites informations supplémentaires définissant si les informations relatives aux abonnements stockées peuvent ou ne peuvent pas être utilisées pour définir effectivement la gestion de flux d'informations à base de paquets vers et/ou depuis des équipements d'abonné respectifs (2), **caractérisée en ce que** l'entité de base de données d'informations d'abonné (5) est adaptée pour stocker plusieurs contextes PDP pour un abonné, chacun des plusieurs contextes PDP stockés pour un abonné ayant un indicateur séparé indiquant si le contexte PDP respectif peut être ou non effectivement utilisé pour une activation de contexte PDP demandée.

22. Entité de base de données selon la revendication 21, dans laquelle l'entité de base de données d'informations d'abonné (5) est un registre de localisation nominal, HLR.

23. Base de données selon la revendication 21 ou 22, dans laquelle les informations relatives aux abonnements concernent un ou plusieurs contextes PDP.

24. Entité de base de données selon l'une quelconque des revendications d'entité précédentes, dans laquelle, lorsque lesdites informations supplémentaires définissant que les informations relatives aux abonnements stockées ne peuvent pas être utilisées pour définir effectivement la gestion de flux d'informations à base de paquets vers et/ou depuis des équipements d'abonné respectifs (2) sont écrites dans ladite entité de base de données, l'entité de base de données (5) est adaptée pour envoyer un message à un noeud de support (4) stockant les informations relatives aux abonnements, le message commandant au noeud de support de supprimer les informations relatives aux abonnements stockées.

25. Entité de base de données selon l'une quelconque des revendications précédentes, dans laquelle, lorsque lesdites informations supplémentaires définissant que les informations relatives aux abonnements stockées peuvent être utilisées pour définir effectivement la gestion de flux d'informations à base de paquets vers et/ou depuis des équipements d'abonné respectifs (2) sont écrites dans ladite entité de base de données (5), l'entité de base de données est adaptée pour envoyer un message à un noeud de support (4) pour copier au moins une partie des informations relatives aux abonnements stockées dans l'entité de base de données vers le noeud de support pour utilisation consécutive pour définir la gestion d'un flux d'informations à base de paquets vers et/ou depuis des équipements d'abonné respectifs.

26. Entité de base de données selon l'une quelconque des revendications d'entité précédentes, comprenant des moyens d'horloge, l'entité de base (5) étant adaptée pour déclencher les moyens d'horloge lorsqu'une désactivation d'informations relatives aux abonnements stockées se produit, et pour supprimer, après l'expiration des moyens d'horloge, des informations relatives aux abonnements stockées désactivées de l'entité de base de données.
